# EUROPÄISCHE PATENTSCHRIFT

(11) **EP 0 563 556 B1**
(45) Veröffentlichungstag und Bekanntmachung des Hinweises auf die Patenterteilung: **08.11.1995**
(21) Anmeldenummer: 93102359.2
(22) Anmeldetag: 16.02.1993
(51) Int. Cl.: B01F 5/04, C04B 7/43, F27B 15/00

(54) **Vorrichtung zum Mischen von feinkörnigen Materialien und/oder Flüssigkeiten**
Device for mixing of fine-grained materials and/or liquids
Dispositif pour mélanger des matériaux à grains fins et/ou liquides

(30) Priorität: 05.03.1992 DE 4206981
(43) Veröffentlichungstag der Anmeldung: 06.10.1993
(73) Patentinhaber: PAUL ENSLE STIFTUNG & CO. KG, D-74076 Heilbronn (DE)
(72) Erfinder: Molerus, Otto, Prof. Dr.-Ing., W-8551 Hemhofen (DE); Töpfer, Klaus Peter, Dipl.-Ing., W-7100 Heilbronn (DE)
(74) Vertreter: Dreiss, Fuhlendorf, Steimle & Becker, Patentanwälte

(56) Entgegenhaltungen:
- EP-A- 0 157 691
- DE-A- 4 108 888
- FR-A- 2 135 851
- US-A- 3 298 110
- US-A- 5 118 288

## Beschreibung

Die Erfindung betrifft eine Vorrichtung zum Vermischen von feinkörnigen Materialien und/oder Flüssigkeiten mit einer Fördervorrichtung in Form mindestens eines Gebläses oder einer Pumpe, bei der von mindestens einem Vorratsbehälter, gegebenenfalls bereits im gewünschten Verhältnis vorgemischt, das Mischgut dosiert durch einen Mischbehälter, gegebenenfalls nach chemischen oder physikalischen Veränderungen, gegebenenfalls über einen oder mehrere Ausscheider, mindestens einem Sammelbehälter zugeführt ist.

Solche Vorrichtungen sind für die gleichzeitige Durchführung von physikalischen oder chemischen Reaktionen allgemein bekannt. Zur Erzielung einer guten Durchmischung muß der Mischbehälter relativ großvolumig sein, wodurch ein relativ großes Baugewicht und Bauvolumen notwendig ist.

Durch die DE-U-88 03 095 ist eine "Vorrichtung zum Kontaktieren von unmischbaren und teilweise mischbaren Strömungsmitteln" bekannt geworden. Hierbei werden einem Mischabschnitt zwei Flüssigkeiten zugeführt, die in einem strömungsmäßig nachgeschalteten Kontaktierungsabschnitt in innigen Kontakt zueinander gebracht werden sollen. Der Mischabschnitt weist zwei Düsen auf. Über die in Strömungsrichtung erste Düse wird die erste Flüssigkeit eingebracht, während in den Zwischenraum zwischen den beiden Düsen die zweite Flüssigkeit einströmen kann. Im Kontaktierungsabschnitt wird die Durchströmung mit Hilfe von Leitflächensätzen verlangsamt, um eine möglichst lange Kontaktierungszeit zu gewährleisten. Die beiden Flüssigkeiten werden in einem nachfolgenden Trennabschnitt wieder voneinander getrennt.

Ziel dieser vorbekannten Vorrichtung ist also nicht das endgültige Vermischen zweier Medien, sondern nur das Vermischen über einen bestimmten Zeitraum, während dem die Kontaktierung stattfinden soll. Aus der Vorrichtung tritt demzufolge kein Mischgut aus.

Bei der eingangs beschriebenen Vorrichtung ist demgegenüber die Vermischung der Komponenten das angestrebte Ziel und infolgedessen verläßt diese Vorrichtung auch eine Mischung aus den verschiedenen zugeführten Komponenten. In der Regel wird ein möglichst zügiges Durchströmen des Mischbehälters angestrebt, um die Vorrichtung leistungsfähig zu machen. Insofern konnte also diese vorbekannte Vorrichtung keine Anregung zu einer vorteilhaften Weiterbildung der gattungsgemäßen Vorrichtung ergeben.

Durch die EP-A-0 157 691 ist eine Vorrichtung bekannt geworden, mit deren Hilfe man eine Flüssigkeit in einem Gasstrom atomisieren kann. Die Flüssigkeit und der Gasstrom durchlaufen nacheinander mehrere Venturidüsen, was abwechselnd zu einer Beschleunigung und Verlangsamung des Medienstromes führt. Die beigefügte Luft dient also hierbei nicht als Transportmittel, sondern als eine Komponente des "Endprodukts". Wenn jedoch die Luft lediglich oder zumindest vorwiegend zum Transport fester Körper untergemischt werden soll, so kann dieser Druckschrift kein Hinweis entnommen werden, wie man am Ende der Transportstrecke die Luft von den festen Stoffen wieder trennen kann.

Aufgabe der vorliegenden Erfindung ist es, eine Vorrichtung der eingangs genannten Art so zu verbessern, daß eine gute und rasche Vermischung der Materialien und/oder Flüssigkeiten möglich ist, wobei das Baugewicht und das Bauvolumen möglichst gering sein sollen.

Zur Lösung dieser Aufgabe sieht die Erfindung vor, daß der Mischbehälter mehrere hintereinander liegende, Düsen aufweisende Mischkammern umfaßt, die eine Folge von beschleunigten, gleichbleibenden und verzögerten - oder umgekehrt - Strömungsgeschwindigkeiten aufweisen, wobei der Mischbehälter senkrecht oder zumindest steil schräg angeordnet ist, und daß das Mischgut von unten nach oben entgegen der Schwerkraft mittels der Fördervorrichtung durch die Düsen hindurchführbar ist, wobei wenigstens ein Teil der Düsen Venturidüsen sind.

In dieser Vorrichtung verweilen größere Teilchen länger als kleinere, was dem angestrebten Produkt zugute kommt. Größere Teilchen brauchen nämlich üblicherweise für physikalische oder chemische Reaktionen eine längere Zeit als kleinere, weswegen der ganze Mischprozeß aufgrund einer quasi automatischen Berücksichtigung der Teilchengröße optimal abläuft. Falls der Mischbehälter lediglich geneigt angeordnet ist, muß darauf geachtet werden, daß auch an den flachsten Stellen der Düsen noch ein Abgleiten der Partikel durch die Schwerkraft erfolgt, um so ein Zusetzen der Düsen zu vermeiden.

Durch die gewählte Düsenausbildung und -anordnung erreicht man ein geringes Bauvolumen und auch Konstruktionsgewicht.

Um auch Stoffe mit unterschiedlichen Reaktionszeiten und Reaktionsverhalten gut mischen zu können, können im Bereich einer oder mehrerer Düsen Zuführungen für zusätzliche Mischungsbestandteile vorgesehen sein. Es kann auch entsprechend den Reaktionserfordernissen an vorgewählten Stellen zusätzlich Energie zuführbar sein.

Die Misch- und Reaktionswirkung kann noch dadurch verbessert werden, daß die Zuführung in tangentialer Richtung in der Düse mündet.

Zur Erzielung eines optimalen Durchsatzes kann der Düsenrohrdurchmesser der Düsen und der Förderstrom so gewählt sein, daß sich mit der Fördergeschwindigkeit und dem Durchmesser im engsten Strömungsquerschnitt beim Durchströmen eine Reynoldszahl von Re ≧ 10⁵ einstellt.

Bei einer Vorrichtung, insbesondere zur Herstellung pulverförmiger Güter wie mineralischer Bindemittel unter Teilvakuum kann zwischen dem Mischbehälter und dem Sammelbehälter mindestens ein Zyklon angeordnet sein, vorzugsweise aber mehrere hintereinander geschaltete Zyklone, wobei gegebenenfalls zu feine Abscheidungen, insbesondere des letzten Zyklons wieder in den Mischbehälter zurückführbar sein können. Es kann so eine relativ konstante Korngröße erreicht werden.

Zur Energieeinsparung kann zwischen dem Mischbehälter und dem Sammelbehälter mindestens ein Wärmetauscher vorgesehen sein, wobei mindestens ein Teil des dem Mischprozeß zugeführten Mischgutes - z.B. die Transportluft - vorgewärmt und die fertige Mischung abgekühlt wird.

Eine weitgehend mischdruckunabhängige Dosierung des Mischguts kann durch mindestens eine Zellenradschleuse erreicht werden bzw. durch eine Vorschaltung einer zirkulierenden Wirbelschicht.

Besonders vorteilhaft kann die beschriebene Vorrichtung für die Durchführung eines Verfahrens zur Herstellung mineralischer Bindemittel verwendet werden, wobei, aus einem Vorratsbehälter Rohmehl über einen Pufferbehälter und eine Zellenradschleuse dosiert, koninuierlich über ein Mischventil mittels Transportluft dem Mischbehälter zugeführt wird und die Mischung unter starker Verwirbelung durch hintereinander geschaltete Düsen vorzugsweise durch Unterdruck hindurchgeführt wird und dabei in einem ersten Bereich eine Entgasung erfolgt und im nachfolgenden Bereich bei einer Temperatur von etwa 1200-1400°C gesintert wird und durch entlang dem Mischbehälter angeordnete Brenner eine Erhitzung und nach dem Austritt aus dem Mischbehälter zur Energierückgewinnung über Wärmetauscher abgekühlt wird und dann das Mischgut von der Transportluft getrennt wird.

Eine wesentliche Herabsetzung der erforderlichen Brennerleistung kann dadurch erreicht werden, daß dem Mischgut Kohlenmehl oder Kohlenstaub oder sonstiges restkohlehaltiges Material zugemischt wird.

Weitere erfindungsgemäße Ausbildungen sind den Unteransprüchen zu entnehmen und werden mit ihren Vorteilen anhand der beigefügten Zeichnungen in der nachstehenden Beschreibung näher erläutert. Es zeigt:
- Figur 1: eine schematische Gesamtansicht einer Vorrichtung zum Mischen von feinkörnigem Material,
- Figur 2: eine schematische Teilansicht des Mischbehälters

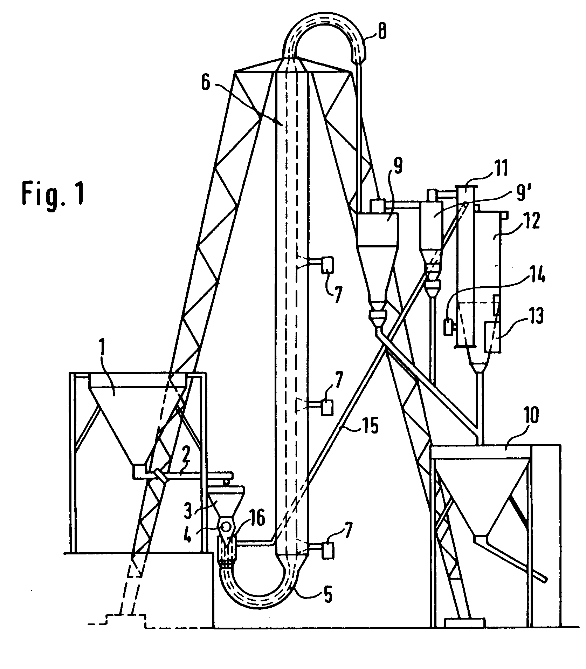

Die in Figur 1 schematisch dargestellte Vorrichtung ist für die Herstellung von mineralischen Bindemitteln, nämlich Zement, unter Teilvakuum konzipiert. Sie weist einen Vorratsbehälter 1 für Rohmehl auf. Über eine Transportschnecke 2 wird dieses zu einem Pufferbehälter 3 transportiert und von dort über eine Zellenradschleuse 4 unter Beimischung von Transportluft über einen Wärmetauscher 5 erwärmt und zu einem vertikal angeordnetem Mischbehälter 6 geleitet. Bereits durch den Wärmetauscher 5 wird das vorgemischte, relativ feinkörnige Rohmehl erwärmt und dann durch mehrere, entlang des Mischbehälters 6 angeordnete, Brenner 7 zusammen mit der Transportluft erhitzt. Im unteren Bereich des Mischbehälters 6 erfolgt eine Entsäuerung und darüber bei einer Temperatur zwischen etwa 1100°C und 1400°C eine Sinterung des Rohmehls.

Am Ausgang des Mischbehälters 6 ist wiederum ein Wärmetauscher 8 angeordnet, in dem das Mischgut rasch abgekühlt einem Ausscheider in Form eines Zyklons 9 zugeführt wird. Die durch den Zyklon 9 ausgesonderten festen Bestandteile rutschen durch Schwerkraft in einen Sammelbehälter 10. Die Abluft des Zyklons 9 wird einem weiteren Zyklon 9' zugeführt und es werden dort weitere Festbestandteile ausgeschieden und dem Sammelbehälter 10 zugeführt. Die Abluft des weiteren Zyklons 9' wird über einen Wärmetauscher 11 und einen Schlauchfilter 12 durch eine Fördereinrichtung in Form eines Gebläses 13 abgesaugt. Durch diese Absaugung herrscht praktisch in der ganzen Anlage ein Unterdruck bis zu etwa 175 mbar.

Durch ein weiteres Gebläse 14 wird Frischluft durch den Wärmetauscher 11 über eine Rückführleitung 15 zu einem Mischventil 16 geführt, durch das Frischluft und die erwärmte Luft des Wärmetauschers 11 gemischt und als Transportluft der Mischvorrichtung wie eingangs beschrieben zugeführt wird.

Auch das durch den Schlauchfilter 12 abgefangene besonders feine Mischgut wird dem Sammelbehälter 10 zugeführt. Es kann aber auch, wenn zu feines Mischgut vermieden werden soll, über die Rückführleitung 15 oder auch anderweitig dem Mischprozeß wieder zugeführt werden.

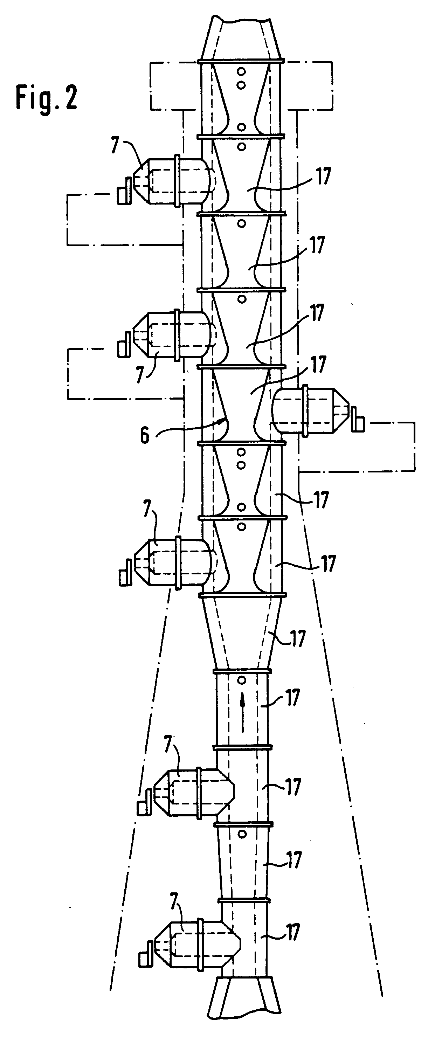

Die spezielle Ausbildung des Mischbehälters 6 ist in Figur 2 in größerem Maßstab schematisch dargestellt. Dieser Mischbehälter 6 ist aus vielen etwa zylindrischen Teilen 17 zusammengesetzt, wobei die unteren Teile 17 rohrförmig sind, die anschließenden Teile 17 sind als Venturidüsen ausgebildet. Es sind jedoch auch andere Ausführungsformen denkbar, bei denen die Teile 17 eine kegelige Form besitzen. Durch die Wahl des Radius im Eintrittsbereich der Düse, insbesondere einer Venturidüse, wird durch die dort entstehende Fliehkraft bzw. Beschleunigung, insbesondere bei Hochtemperaturreaktionen, ein Anbacken des Materials verhindert, so daß hier eine Venturi-Ausbildung von Vorteil ist. Die Wahl der Gasgeschwindigkeit ist je nach Temperatur so zu wählen, daß in der Düsenerweitung eine Verwirbelung stattfindet. Bei zu hoher Geschwindigkeit würde das Material einfach von Düse zu Düse durchschießen und sich nicht in der Erweiterung vermischen. Es wechseln also immer Querschnittsverengungen mit Querschnittserweiterungen ab, wodurch das nach oben geförderte Mischgut stark durchwirbelt wird. Die schwereren Mischbestandteile sinken durch die vertikale Anordnung in der Strömung nach unten, so daß sie eine längere Verweildauer und damit eine längere Reaktionszeit im Mischer haben als die feinkörnigeren Bestandteile. Soll das Verfahren für kalte Bereiche angewendet werden, so kann auf die Brenner 7 verzichtet werden.

Wie gestrichelt angedeutet sind die Teile 17 zur Wärme- und Korrosionsisolierung mit Schamott verkleidet.

Die Querschnitte der Teile 17 vergrößern sich entsprechend der durch die Brenner 7 zugeführten Gasmenge, so daß in den einzelnen Abschnitten 17 etwa die gleichen Strömungsverhältnisse herrschen, wobei die Strömungsgeschwindigkeit im Regelquerschnitt etwa zwischen 2 und 4 m/s liegt, so daß bei einer Offenlänge von ca. 14 m eine Verweilzeit des Mischguts von 4 bis 6 Sekunden im Mischbehälter 6 eingehalten wird, wobei die Verweildauer je nach Anzahl der Düsen variieren kann.

Der Wärmetauscher 5 ist doppelschalig ausgeführt, um so im Gegenstromverfahren eine Vorwärmung des eintretenden Mischguts zu erreichen. Im unteren Bereich des Mischbehälters 6 wird das Mischgut auf eine Temperatur von etwa 600-800°C aufgeheizt und nach Durchlauf einer Entsäurungszone tritt das Mischgut mit mehr als 1000°C in eine Sinterzone ein, in der eine weitere Aufheizung auf ca. 1200-1400°C erfolgt. Im oberen Wärmetauscher 8 erfolgt dann eine rasche Abkühlung innerhalb einer kurzen Zeit von ca. 0,2 s auf etwa 700°C. In den Zyklonen 9,9' wird dann das Material, das eine Korngröße in der Regel von 50-200 µm aufweist, abgeschieden. Durch eine Trennung der Kornfraktionen z.B. in einem nicht näher dargestellten Sichter oder Sieb können die feinen Bestandteile separiert und wieder dem Misch- und Reaktionskreislauf zugeführt werden.

Das beschriebene Verfahren eignet sich besonders gut zur Herstellung von C2S-Zementen. Da in Folge der schnellen Abkühlung sehr feinkristalline Formen der Betamodifikation von Belit erhalten werden, ergibt sich eine relativ reaktionsfreudige Form von Belit (physikalische Stabilisierung).

Durch die Zugabe von Alkali (Natrium, Magnesium) oder Schwefel bzw. Phosphor lassen sich die Nachteile einer langsameren Anfangsfestigkeit von Belit noch zusätzlich ausgleichen (chemische Stabilisierung).

Da das durch das beschriebene Verfahren hergestellte Endprodukt im Vergleich zu den im Drehrohrofen sehr großen Granalien (Durchmesser 2-3 cm) sehr fein ist (max. 200 µm), ist für das Ausmahlen zu Zement sehr viel weniger Energie erforderlich.

Durch die Entsäuerung und Sinterung unter Unterdruck in einem Arbeitsablauf ohne dazwischenliegende Abkühlung ist ein besonders geringer Energiebedarf erforderlich und es wird insbesondere auch noch sichergestellt, daß keine örtlichen Überhitzungen über 1400°C erfolgen, wodurch gleichzeitig eine starke Herabsetzung einer Stickoxidbildung erfolgt.

Ein weiterer Vorteil der beschriebenen Vorrichtung und des Verfahrens liegt darin, daß auch kleine Anlagen wirtschaftlich arbeiten können und so durch Anordnung mehrerer Öfen eine Kapazitätsanpassung einfach möglich ist. Die beschriebene Vorrichtung ist gegenüber den üblichen Drehrohröfen wesentlich kompakter, benötigt nur eine geringe Grundfläche und hat ein wesentlich geringeres Konstruktionsgewicht und ist damit auch sehr preisgünstig. Gegenüber Drehrohröfen ist eine sehr kurzfristige Intriebnahme und Abschaltung möglich. Weiter kann zur Verbesserung der Energiezufuhr dem Mischgut restkohlehaltiges Material oder Kohle mit geringer Qualität beigemischt werden. Dabei ist allerdings auf die chemische Zusammensetzung und die Reststoffe der Asche zu achten. Sie müssen endproduktverträglich sein.

Besonders vorteilhaft wirken die Düsen. Durch die Beschleunigung und Verwirbelung erfolgt ein Ablösen der Festkörperteile von der Wandung, d.h. ein Ankleben bzw. Anbacken wird verhindert.

Die Düsen haben vorzugsweise einen Öffnungswinkel von etwa 10°. Bei größeren Öffnungswinkeln besteht die Gefahr von Strömungsablösungen. Der Mischgutdurchsatz und der Düsendurchmesser sind so gewählt, daß sich mit der Gasgeschwindigkeit und dem Durchmesser im engsten Strömungsquerschnitt beim Durchströmen eine Reynoldszahl von Re ≧ 10⁵ einstellt.

## Patentansprüche

1. Vorrichtung zum Mischen von feinkörnigen Materialien und/oder Flüssigkeiten mit einer Fördervorrichtung in Form mindestens eines Gebläses (13) oder einer Pumpe, bei der von mindestens einem Vorratsbehälter (1), gegebenenfalls bereits in gewünschtem Verhältnis vorgemischt, das Mischgut dosiert durch einen Mischbehälter (6), gegebenenfalls über einen oder mehrere Ausscheider, mindestens einem Sammelbehälter (10) zuführbar ist, **dadurch gekennzeichnet**, daß der Mischbehälter (6) mehrere hintereinander liegende, Düsen aufweisende Mischkammern (17) umfaßt, die wechselnde Querschnitte aufweisen und dadurch eine Folge von beschleunigten, gleichbleibenden und verzögerten - oder umgekehrt - Strömungsgeschwindigkeiten bewirken, wobei der Mischbehälter (6) senkrecht oder zumindest steil schräg angeordnet ist, und daß das Mischgut von unten nach oben entgegen der Schwerkraft mittels der Fördervorrichtung durch die Düsen hindurchführbar ist, wobei wenigstens ein Teil der Düsen Venturidüsen sind.

2. Vorrichtung nach Anspruch 1, dadurch gekennzeichnet, daß im Bereich einer oder mehrerer Düsen eine Zuführung zusätzlicher Mischungsbestandteile vorgesehen ist.

3. Vorrichtung nach Anspruch 1 oder 2, dadurch gekennzeichnet, daß im Bereich einer oder mehrerer Düsen (17) eine Zusatzenergiezufuhr vorgesehen ist.

4. Vorrichtung nach Anspruch 2 und/oder 3, dadurch gekennzeichnet, daß die Zuführung in tangentialer Richtung in der Düse mündet.

5. Vorrichtung nach einem der Ansprüche 1-4, dadurch gekennzeichnet, daß der Durchmesser der Düsen und der Förderstrom so gewählt ist, daß sich mit der Fördergeschwindigkeit und dem Durchmesser im engsten Strömungsquerschnitt beim Durchströmen eine Reynoldszahl von Re ≧ 10⁵ einstellt.

6. Vorrichtung nach einem der Ansprüche 1-5, dadurch gekennzeichnet, daß durch die Fördereinrichtung der Innenraum des Mischbehälters (6) gegenüber der Außenatmosphäre Unterdruck aufweist.

7. Vorrichtung, insbesondere zur Herstellung pulverförmiger Güter wie mineralische Bindemittel unter Teilvakuum, nach einem der Ansprüche 1-6, dadurch gekennzeichnet, daß zwischen dem Mischbehälter (6) und dem Sammelbehälter (10) mindestens ein Zyklon (9,9') angeordnet ist, vorzugsweise aber mehrere hintereinander geschaltete Zyklone (9,9') und daß gegebenenfalls zu feine Abscheidungen, insbesondere des letzten Zyklons, wieder in den Mischbehälter (6) zurückführbar sind.

8. Vorrichtung nach einem der Ansprüche 1-7, dadurch gekennzeichnet, daß zwischen dem Mischbehälter (6) und dem Sammelbehälter (10) mindestens ein Wärmetauscher (11) vorgesehen ist und daß mindestens ein Teil des dem Mischprozeß zugeführten Mischgutes vorgewärmt und die fertige Mischung abgekühlt wird.

9. Vorrichtung nach einem der Ansprüche 1-8, dadurch gekennzeichnet, daß zum Dosieren des Mischguts mindestens eine Zellenradschleuse (4) bzw. eine zirkulierende Wirbelschicht vorgesehen ist.

10. Vorrichtung nach Anspruch 8, dadurch gekennzeichnet, daß vom Wärmetauscher (11) vorgewärmte Kühlluft durch einen dem Mischbehälter (6) vorgeschalteten Wärmetauscher (5) zuführbar ist und gegebenenfalls über eine Rückführleitung (15) dem Prozeß als Transportluft über ein Mischventil (16) zuführbar ist.

11. Vorrichtung nach einem der Ansprüche 1 bis 10, dadurch gekennzeichnet, daß sich in den Mischkammern (17) Querschnittserweiterungen mit Querschnittsverengungen abwechseln.

12. Verfahren zur Herstellung mineralischer Bindemittel mit einer Vorrichtung gemäß einer oder mehreren der Ansprüche 1-11, dadurch gekennzeichnet, daß aus einem Vorratsbehälter (1) Rohmehl über einen Pufferbehälter (3) und eine Zellenradschleuse (4) dosiert, kontinuierlich über ein Mischventil (16) zusammen mit Transportluft dem Mischbehälter (6) zugeführt wird, daß die Mischung unter starker Verwirbelung durch hintereinander geschaltete Venturidüsen unter Unterdruck hindurchgeführt wird und dabei in einem ersten Bereich entsäuert und im nachfolgenden Bereich bei Temperaturen von etwa 1200-1400°C gesintert wird und im Austritt aus dem Mischbehälter (6) abgekühlt und dann das Mischgut von der Transportluft getrennt wird.

13. Verfahren nach Anspruch 12, dadurch gekennzeichnet, daß dem Mischgut zur Herabsetzung der erforderlichen Brennerleistung Kohlenmehl oder -staub zugemischt wird.

## Claims

1. Apparatus for mixing fine-grain materials and/or liquids comprising a conveyor device in the form of at least one fan (13) or pump, in which the material to be mixed can be fed from at least one supply container (1), possibly already premixed in the desired ratio, in a metered condition through a mixing container (6), possibly by way of one or more separators, to at least one collecting container (10), characterised in that the mixing container (6) has a plurality of successively disposed mixing chambers (17) which have nozzles and which are of varying cross-sections and which thereby produce a series of accelerated, uniform and decelerated - or vice-versa - flow speeds, wherein the mixing container (6) is arranged perpendicularly or at least steeply inclinedly, and that the material to be mixed can be passed through the nozzles from below upwardly in the opposite direction to the force of gravity by means of the conveyor device, wherein at least some of the nozzles are venturi nozzles.

2. Apparatus according to claim 1 characterised in that a feed of additional constituents of the mixture is provided in the region of one or more nozzles.

3. Apparatus according to claim 1 or claim 2 characterised in that an additional feed of energy is provided in the region of one or more nozzles (17).

4. Apparatus according to claim 2 and/or 3 characterised in that the feed opens in the tangential direction in the nozzle.

5. Apparatus according to one of claims 1 to 4 characterised in that the diameter of the nozzles and the conveyor flow are so selected that a Reynolds number Re ≧ 10⁵ occurs with the conveyor speed and the diameter in the narrowest flow cross-section when the material flows therethrough.

6. Apparatus according to one of claim 1 to 5 characterised in that the interior of the mixing container (6) is at a reduced pressure relative to the outside atmosphere due to the conveyor device.

7. Apparatus, in particular for the production of powder materials such as mineral binding agents in a partial vacuum, according to one of claims 1 to 6, characterised in that disposed between the mixing container (6) and the collecting container (10) is at least one cyclone separator (9, 9') but preferably a plurality of successively connected cyclone separators (9, 9'), and that possibly excessively fine separated materials, in particular from the last cyclone separator, can be fed back into the mixing container (6) again.

8. Apparatus according to one of claim 1 to 7 characterised in that at least one heat exchanger (11) is provided between the mixing container (6) and the collecting container (10) and at least a part of the material to be mixed which is fed to the mixing process is preheated and the finished mixture is cooled down.

9. Apparatus according to one of claim 1 to 8 characterised in that there is provided at least one cell wheel lock device (4) or a circulating fluidised bed, for the purposes of metering the material to be mixed.

10. Apparatus according to claim 8 characterised in that cooling air which has been preheated by the heat exchanger (11) can be fed through a heat exchanger (5) connected upstream of the mixing container (6) and possibly fed by way of a return conduit (15) to the process as transportation air by way of a mixing valve (16).

11. Apparatus according to one of claim 1 to 10 characterised in that cross-sectional enlargements alternate with cross-sectional reductions in the mixing chambers (17).

12. A process for the production of mineral binding agents with an apparatus according to one or more of claims 1 to 11 characterised in that crude powder from a supply container (1), metered by way of a buffer container (3) and a cell wheel lock device (4), is continuously fed by way of a mixing valve (16) together with transportation air to the mixing container (6), that the mixture is passed in a condition of severe turbulence through successively connected venturi nozzles under a reduced pressure and in that operation is deacidified in a first region and is sintered in the subsequent region at temperatures of about 1200 - 1400°C and is cooled at the discharge from the mixing container (6) and then the mixed material is separated from the transportation air.

13. A process according to claim 12 characterised in that coal dust or powder is mixed with the material to be mixed in order to reduce the required burner output.

## Revendications

1. Dispositif pour mélanger des matériaux à grains fins et/ou des liquides avec un dispositif de transport se présentant sous la forme d'au moins une soufflante (13) ou d'une pompe et dans lequel le produit à mélanger, provenant d'au moins une trémie de stockage (1), le cas échéant déjà préhomogénéisé dans des proportions voulues, est dosé dans un mélangeur (6) et peut être acheminé, le cas échéant, en passant par un ou plusieurs séparateurs, vers au moins une trémie collectrice (10), caractérisé en ce que le mélangeur (6) comporte plusieurs chambres de mélange (17) disposées à la suite les unes des autres, dotées de tuyères et dont la section de passage est variable de telle sorte qu'elles agissent en augmentant, en maintenant constante ou en diminuant successivement - dans cet ordre ou dans l'ordre inverse - les vitesses d'écoulement, le mélangeur (6) étant disposé verticalement ou tout du moins de façon très fortement inclinée, le produit à mélanger pouvant être acheminé, en traversant les tuyères de bas en haut contre l'effet de la pesanteur, au moyen d'un dispositif de transport, une partie au moins des tuyères étant à effet Venturi.

2. Dispositif selon la revendication 1, caractérisé en ce que des arrivées pour des constituants de mélange additionnels sont prévues au niveau d'une ou de plusieurs tuyères.

3. Dispositif selon l'une ou l'autre des revendications 1 et 2, caractérisé en ce qu'un apport d'énergie supplémentaire est prévu au niveau d'une ou de plusieurs tuyères (17).

4. Dispositif selon la revendication 2 et/ou la revendication 3, caractérisé en ce que l'introduction dans les tuyères se fait tangentiellement.

5. Dispositif selon l'une quelconque des revendications 1 à 4, caractérisé en ce que le diamètre des tuyères et le flux d'entraînement sont choisis de telle sorte que, pour la vitesse de transport et pour le diamètre du passage d'écoulement le plus étroit, le nombre de Reynolds (Re) en charge soit supérieur ou égal à 10⁵.

6. Dispositif selon l'une quelconque des revendications 1 à 5, caractérisé en ce que le dispositif de déplacement a pour effet de mettre l'intérieur du mélangeur (6) en dépression par rapport à l'air extérieur.

7. Dispositif, en particulier pour la fabrication de produits pulvérulents, comme les liants minéraux, sous vide partiel, conformément à l'une quelconque des revendications 1 à 6, caractérisé en ce que, entre le mélangeur (6) et la trémie de stockage (10), est disposé au moins un cyclone (9, 9'), mais de préférence plusieurs cyclones (9, 9') disposés à la suite les uns des autres, et en ce que, le cas échéant, les produits de séparation trop fins, peuvent être renvoyés au mélangeur (6), en particulier à partir du dernier cyclone.

8. Dispositif selon l'une quelconque des revendications 1 à 7, caractérisé en ce que, entre le mélangeur (6) et la trémie de stockage (10), est prévu au moins un échangeur de chaleur (11) et en ce qu'une partie au moins du produit à mélanger entrant dans le processus de mélange est préchauffée et le mélange final refroidi.

9. Dispositif selon l'une quelconque des revendications 1 à 8, caractérisé en ce que, pour le dosage du mélange, il est prévu au moins une écluse à roue cellulaire (4) et /ou un lit fluidisé à circulation.

10. Dispositif selon la revendication 8, caractérisé en ce que l'air de refroidissement préchauffé par l'échangeur de chaleur (11) peut être envoyé dans un échangeur de chaleur (5) situé en amont du mélangeur (6) et, le cas échéant, envoyé au processus par une conduite de recyclage (15) via une vanne mélangeuse (16) pour servir d'air de transport.

11. Dispositif selon l'une quelconque des revendications 1 à 10, caractérisé en ce que dans les chambres de mélange (17), les sections de passage augmentées alternent avec les sections de passage réduites.

12. Procédé pour la fabrication de liants minéraux au moyen d'un dispositif selon l'une ou plusieurs des revendications 1 à 11, caractérisé en ce que la farine crue, provenant d'une trémie de stockage (1) est dosée dans une trémie tampon (3) avec écluse à roue cellulaire (4), passe dans une vanne mélangeuse (16) et est envoyée en continu par un air de transport au mélangeur (6) où le mélange s'effectue avec un tourbillonnement intense en passant dans des tuyères Venturi successives en dépression, une désacidification étant effectuée dans une première zone et un frittage étant ensuite effectué dans une seconde zone à une température de l'ordre de 1200 à 1400°C environ, un refroidissement étant ensuite effectué à la sortie du mélangeur (6) et le produit mélangé étant finalement séparé de l'air de transport.

13. Procédé selon la revendication 12, caractérisé en ce que, pour réduire la puissance nécessaire pour les brûleurs, de la poudre de charbon ou de la poussière de charbon peuvent être ajoutées au produit à mélanger.
